# EUROPÄISCHE PATENTSCHRIFT

(11) **EP 2 362 208 B1**
(45) Veröffentlichungstag und Bekanntmachung des Hinweises auf die Patenterteilung: **23.03.2016**
(21) Anmeldenummer: 10005795.9
(22) Anmeldetag: 04.06.2010
(51) Int. Cl.: G01N 21/64, G01N 21/76, G01N 21/63

(54) **Messvorrichtung zur Messung von Biolumineszenz, Chemolumineszenz oder Fluoreszenz von Objekten, Messsystem und Verfahren zur Beobachtung von Pflanzen**
Measuring device for measuring bioluminescence, chemoluminescence or fluorescence of objects, measuring system and method for observing plants
Dispositif de mesure destiné à la mesure de la bioluminescence, chimioluminescence ou fluorescence d'objets, système de mesure et procédé d'observation de plantes

(30) Priorität: 05.02.2010 DE 202010002010 U
(43) Veröffentlichungstag der Anmeldung: 31.08.2011
(73) Patentinhaber: Berthold Technologies GmbH & Co. KG, 75323 Bad Wildbad (DE)
(72) Erfinder: Hennecke, Manfred, Dr., 73630 Remshalden (DE)
(74) Vertreter: Schön, Thilo

(56) Entgegenhaltungen:
- EP-A1- 1 494 008
- JP-A- 2005 227 183
- US-A1- 2007 289 207
- Anonym: "NightSHADE-ein neues Konzept für Imaging von Pflanzen.", BERTHOLD TECHNOLOGIES BIOANALYTIC Direct Industry Pressemitteilung, 1. Oktober 2009 (2009-10-01), XP002636126, Gefunden im Internet: URL:http://news.directindustry.de/press/be rthold-technologies-bioanalytic/nightshade -ein-neues-konzept-fur-imaging-von-pflanze n-53904-335110.html [gefunden am 2011-05-09]
- Anonymous: "NightOWL II LB 983 Superiority in molecular imaging", Berthold Technologies , 1. November 2007 (2007-11-01), XP002635967, Gefunden im Internet: URL:http://www.alpha-technologies.info/pdf s/NightOWL.pdf [gefunden am 2011-05-09]

## Beschreibung

Die Erfindung betrifft eine Messvorrichtung nach dem Oberbegriff des Anspruchs 1, ein Messsystem nach Anspruch 6 und ein Verfahren zur Beobachtung von Pflanzen nach Anspruch 8.

In der biologischen und pharmazeutischen Forschung werden Fluoreszenz- und Lumineszenzmessverfahren seit vielen Jahren erfolgreich eingesetzt. Hierbei werden transfizierte oder transgene Tiere oder Pflanzen verwendet, wobei wenigstens ein Gen der betreffenden Pflanzen oder des betreffenden Tieres ein Protein kodieren kann, das Lumineszenz oder Fluoreszenz zeigt. Ist dieses Gen aktiv, so wird dieses Protein gebildet und durch Beobachtung dessen Lumineszenz oder Fluoreszenz kann man Rückschlüsse auf die Aktivität des betreffenden Gens ziehen und somit weiterhin beispielsweise auf die Wirksamkeit bestimmter Substanzen auf das Tier/die Pflanze schließen.

Bisherige Vorrichtungen zur Durchführung eines solchen Verfahrens sind im Wesentlichen wie folgt aufgebaut: Sie weisen ein Gehäuse auf, welches eine Messkammer lichtdicht umschließt, wobei dieses Gehäuse eine Tür hat. durch welche das zu messende Objekt in die Messkammer eingebracht werden kann. Am Dach des Gehäuses ist eine Kamera angebracht, deren optische Achse und Blickrichtung senkrecht verläuft, welche also nach unten in die Messkammer blickt. In der Regel weist diese Kamera einen sehr empfindlichen, gekühlten CCD-Sensor auf, so dass die Kamera aus den in der Regel sehr schwachen Lumineszenzsignalen ortsaufgelöste Bilder erzeugen kann. Soll von dem zu messenden Tier oder der zu messenden Pflanze weiterhin eine "normale" photographische Aufnahme gemacht werden, so ist im Bereich des Daches des Gehäuses eine Beleuchtungseinrichtung vorgesehen. Diese strahlt von oben, also im Wesentlichen parallel zur Blickrichtung der Kamera, welche in einem entsprechenden Arbeitszustand dann auch photographische Aufnahmen machen kann. Fluoreszenzaufnahme und photographische Aufnahme (als photographische Aufnahme wird hier eine Aufnahme bezeichnet, welche auf der Reflexion oder Absorption von Licht beruht) können in einem späteren Datenverarbeitungsschritt überlagert werden, so dass man sehr leicht sehen kann, aus welchem Bereich des Tieres/der Pflanze das Lumineszenzlicht stammt. Soll statt Lumineszenz Fluoreszenz gemessen werden, so ist weiterhin eine Fluoreszenz-Anregungsquelle mit einem Anregungsfilter vorhanden und in den optischen Pfad der Kamera muss ein Emissionsfilter einbringbar sein. Ein Messgerät wie es eben beschrieben wurde, wird beispielsweise von der Firma Berthold Technologies unter dem Markennamen "NightOWL" gebaut und vertrieben.

Die US 2006/0057710 A1 zeigt ein Messgerät zur Messung der Biolumineszenz von organischem Material. Dieses Messgerät ist mechanisch sehr aufwendig und zur Messung von ganzen Pflanzen nicht geeignet.

Die gattungsbildende JP 2005227183 A ist Fluoreszenz-Messgerät zur Messung von Essensproben und ähnlichem beschrieben. Hier werden die Prob mittels eines Drehtellers unterhalb einer CCD-Kamera positioniert und von unten von einer Fluoreszenz-Anregungsquelle beleuchtet, um sie zu Fluoreszenz anzuregen.

Aus ANONYMOUS: "NightSHADE - ein neues Konzept für Imaging von Pflanzen (XP-002636126) ist ein System für die Pflanzenforschung bekannt. Dieses weist einen Drehtisch, eine Kamera für Aufnahmen von der Seite , eine LED-Beleuchtung mit Tageslichtsimulation und eine emCCD-Kamera für Aufnahmen von oben auf. Die emCCD-Kamera eignet sich für Fluoreszenzaufnahmen.

Ausgehend von diesem Stand der Technik stellt sich die vorliegende Erfindung die Aufgabe, eine gattungsgemäße Messvorrichtung dahingehend weiterzubilden, dass sie zur Untersuchung von Pflanzen noch besser geeignet ist.

Diese Aufgabe wird durch eine Messvorrichtung mit den Merkmalen des Anspruchs 1 gelöst.

Erfindungsgemäß blickt die Kamera in einem ersten Betriebszustand nicht von oben, sondern von der Seite in die Messkammer. Das heißt, dass die Blickrichtung der Kamera nicht wie bei bisherigen gattungsgemäßen Messvorrichtungen im Wesentlichen vertikal verläuft. Vorzugsweise verläuft die Blickrichtung waagrecht, jedoch sind auch gewisse Abweichungen von dieser waagrechten Richtung möglich.

Weiterhin ist in einem unteren Bereich des Gehäuses eine sich vertikal erstreckende Drehachse für einen Drehteller angeordnet. Hierdurch ist es zum einen möglich, dass Aufnahmen (photographische Aufnahmen und Lumineszenz- oder Fluoreszenzaufnahmen) von mehreren Seiten einer Pflanze gemacht werden, zum anderen ist es möglich, mehrere Pflanzen - insbesondere in speziellen Behältern - auf dem Drehteller anzuordnen, wodurch mehrere Pflanzen in einem Messzyklus beobachtet werden können. Hierzu weist der Drehteller mehrere Haltevorrichtungen auf.

Die seitliche Blickrichtung der Kamera erlaubt zum einen eine Beobachtung der gesamten Pflanze, einschließlich der Wurzeln, sofern die Pflanze in einem durchsichtigen Gel gezogen wird, welches sich in einem durchsichtigen Behältnis befindet, zum anderen behindern die oberen Blätter der Pflanze nicht den Blick auf die darunterliegenden Pflanzenteile.

Weiterhin ist oberhalb der Position des Drehtellers eine nach unten strahlende Bestrahlungseinrichtung vorgesehen, so dass zu untersuchende Pflanzen auch innerhalb der Messvorrichtung wachsen können. Aufgrund dieser Bestrahlungseinrichtungen verhält sich die Pflanze natürlich, das heißt, sie wächst im Wesentlichen vertikal nach oben. Die Bestrahlungseinrichtung weist mehrere Einzelelemente auf, welche welche jeweils mindestens 3 LEDs tragen.

Zur Durchführung von Fluoreszenzmessungen ist eine von der Bestrahlungseinrichtung separate Fluoreszenz-Anregungsquelle vorgesehen.

Die verwendete Kamera ist vorzugsweise für Lumineszenzmessungen geeignet, wozu sie weiter vorzugsweise einen gekühlten Halbleiter-Sensor aufweist.

Eine weitere Aufgabe liegt darin, ein System zur Verfügung zustellen, mit dessen Hilfe eine große Zahl von Pflanzen beobachtet werden kann.

Hierzu wird ein Messystem nach Anspruch 6 vorgeschlagen.

Ein Verfahren zur Beobachtung von Pflanzen mithilfe eines solchen Messsystems ist in Anspruch 8 angegeben.

Um eine Aussage über das Pflanzenwachstum treffen zu können, müssen die Pflanzen in der Regel über einen Zeitraum von mehreren Tagen beobachtet werden. Eine Messung der Lumineszenz oder Fluoreszenz ist hierbei in manchen Fällen jedoch nur ein- oder zweimal am Tag und höchstens jede Stunde für wenige Minuten notwendig. Die zu beobachtenden Pflanzen müssen während der übrigen Zeit nicht zwingend in der Messvorrichtung mit der teuren, hochempfindlichen Kamera sein, sondern können während dieser Zeit in einer separaten Bestrahlungsvorrichtung untergebracht sein, in der sie mittels einer kontrollierten und damit reproduzierbaren Bestrahlung zum Wachstum angeregt werden.

Bevorzugte Ausführungsformen der Erfindung ergeben sich aus den weiteren Unteransprüchen sowie aus den nun mit Bezug auf die Figuren dargestellten Ausführungsbeispielen. Hierbei zeigen:
- Figur 1:: eine Messvorrichtung in einer schematisierten Schnittdarstellung, wobei die Schnittebene vertikal verläuft, in einem ersten Betriebszustand,
- Figur 1a:: die Messorrichtung aus Figur 1 mit einer alternativen Anordnung von Infrarot-Dioden,
- Figur 2:: einen Schnitt entlang der Ebene A-A aus Figur 1,
- Figur 3:: ein Einzelelement einer Bestrahlungseinrichtung,
- Figur 4:: die Messvorrichtung aus Figur 1 in einem zweiten Betriebszustand,
- Figur 4a:: die Messvorrichtung aus Figur 1 mit einer zweiten angeflanschten Kamera,
- Figur 5:: das in Figur 1 Gezeigte bei einer Lumineszenzmessung an einer einzelnen Pflanze,
- Figur 6:: das in Figur 6 Gezeigte bei Durchführung einer Fluoreszenzmessung,
- Figur 7:: Das Detail D aus Figur 1 bei Vorhandensein einer Pflanzen-Kassette und
- Figur 8:: eine Bestrahlungsvorrichtung in einer der Figur 1 entsprechenden Darstellung.

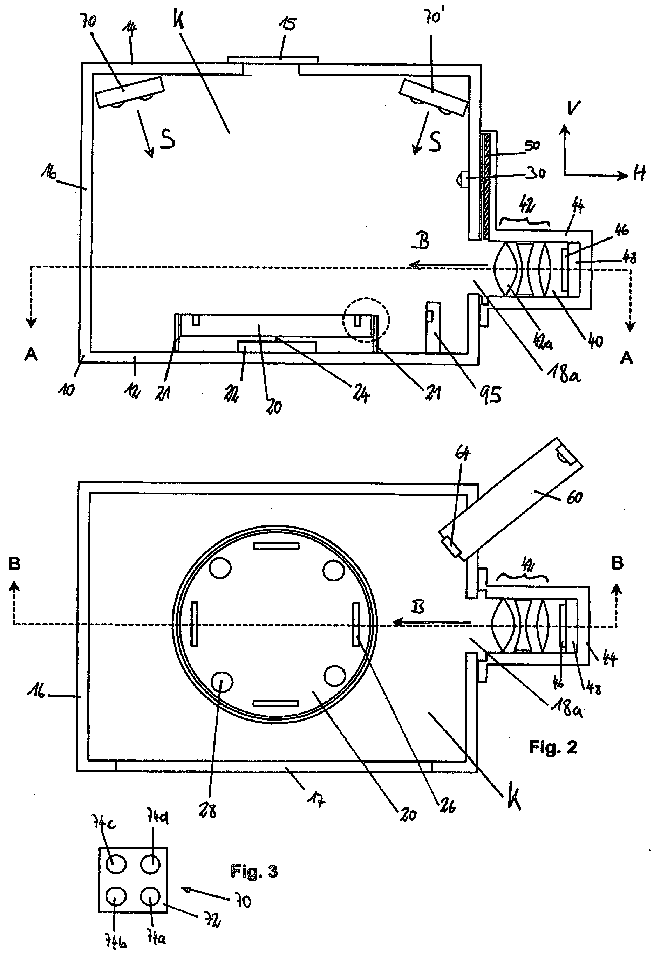

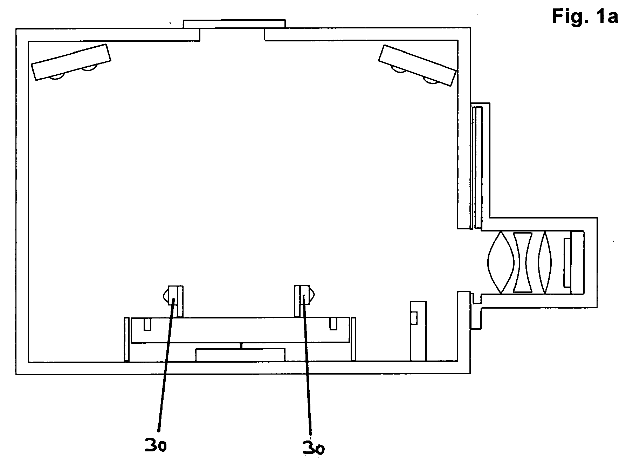

Die Figuren 1 und 2 zeigen schematische Schnittdarstellungen einer Messvorrichtung, wobei die Figur 2 ein Schnitt entlang der Ebene A-A aus Figur 1 und Figur 1 ein Schnitt entlang der Ebene B-B aus Figur 2 ist. Im Folgenden wird Bezug auf beide Figuren genommen:
Die Messvorrichtung weist ein Gehäuse 10 mit einem Boden 12, einem Dach 14 und einer vier Abschnitte aufweisenden Seitenwand 16 auf. Im vorderen Abschnitt der Seitenwand 16 befindet sich eine Tür 17. Bei geschlossener Tür 17 umschließt das Gehäuse 10 lichtdicht eine Messkammer K. In einem unteren Bereich des Gehäuses 10 ist ein mittels eines Motors 22 antreibbare, vertikal stehende Drehachse 24 angeordnet. Auf dieser Drehachse kann kraftschlüssig ein Drehteller 20 wie gezeigt angeordnet werden, welcher somit mittels der Drehachse gedreht werden kann. Der Drehteller 20 besteht zum Beispiel aus einer Aluminiumplatte, welche zur Vermeidung von Reflexionen auf der Oberseite schwarz lackiert ist. Der Drehteller 20 ist von einer statischen Umrandung 21 umgeben.

In einem Abschnitt der Seitenwand 16 ist eine erste Messöffnung 18a vorgesehen, an welche in einem ersten Betriebszustand, wie er in den Figuren 1 und 2 gezeigt ist, eine Kamera 40 mittels geeigneter erster Befestigungseinrichtungen angeflanscht ist, wobei die Verbindung zwischen Kamera und Seitenwand 16 lichtdicht ist. Die Kamera besteht aus einem Kameragehäuse 44, einer Optik 42 mit Eintrittslinse 42a und einem CCD-Sensor 46, welcher mittels eines Kühlers 48, welcher beispielsweise als Peltierkühler ausgebildet sein kann, kühlbar ist. Es ist ein Filterschieber vorhanden, über den vor die Eintrittslinse 42a ein Emissionsfilter 50 eingebracht werden kann. Der Strahlengang der Kamera weist keine Spiegel oder Prismen auf, so dass die optische Achse der Kamera mit ihrer Blickrichtung B zusammenfällt. Unter Blickrichtung B wird hier derjenige Teil des Lichtpfades verstanden, welcher am zu beobachtenden Objekt endet. Man sieht, dass im ersten Betriebszustand die Blickrichtung parallel zu Boden 12 und Drehteller 20 in horizontaler Richtung H, also senkrecht zur Drehachse 24 verläuft.

Oberhalb der ersten Messöffnung 18a ist eine Bestrahlungseinrichtung angeordnet. Die Bestrahlungseinrichtung besteht aus mehreren Einzelelementen. Aufgrund der Schnittdarstellung, in der nur in der Schnittebene liegende Elemente gezeigt sind, sind zwei dieser Einzeletemente 70, 70' zu sehen. Die Bestrahlungseinrichtung emittiert ein Spektrum, welches das natürliche Sonnenlicht - oder genauer gesagt: das natürliche Tageslicht - imitiert. Auf den Aufbau der Einzelelemente wird unten genauer eingegangen. Die Bestrahlungsrichtung S weist nach unten, jedoch nicht notwendigerweise genau senkrecht.

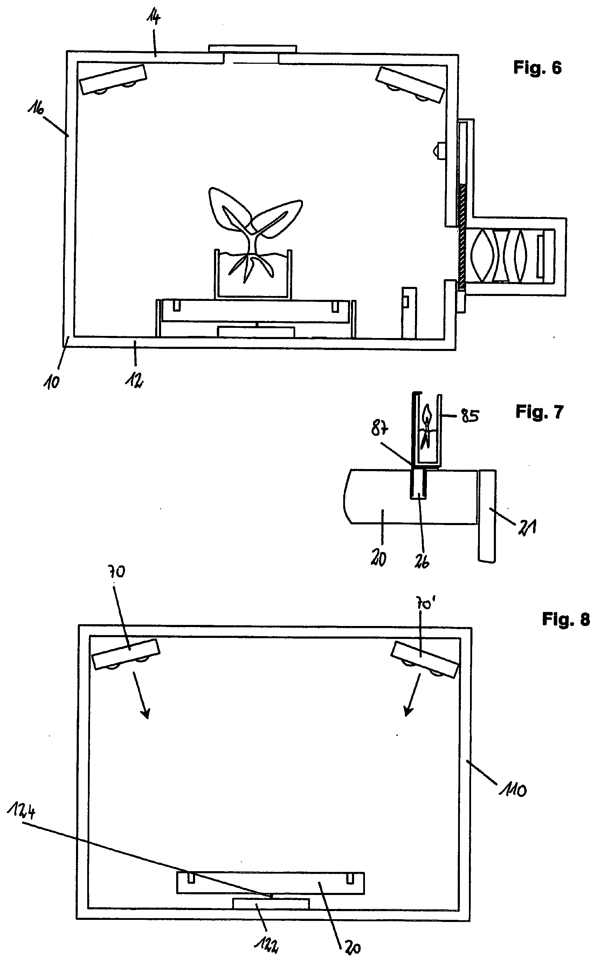

Die gezeigte Messvorrichtung ist auch für die Durchführung von Fluoreszenzmessungen vorgesehen, wozu eine Fluoreszenz-Anregungsquelle 60 vorgesehen ist, welche in Richtung des Drehtellers 20 zeigt. Das Austrittsfenster dieser Fluoreszenz-Anregungsquelle 60 bildet ein Anregungsfilter 64. Wird eine Fluoreszenzmessung durchgeführt, so wird das Emissionsfilter 50 in die in Figur 6 gezeigte Stellung gebracht.

Im Dach 14 des Gehäuses befindet sich eine zweite Messöffnung 18b, welche im ersten Betriebszustand, wie er in Figur 1 gezeigt ist, von einem Blindflansch 15 lichtdicht verschlossen ist.

Von der Oberseite des Drehtellers 20 erstrecken sich Halteschlitze 26, welche als Haltevorrichtung dienen, in den Drehteller. Als weitere Haltevorrichtungen sind Haltebohrungen 28 im Drehteller 20 vorgesehen. Weiterhin sind direkt hinter den Pflanzenbehältern (s. Figur 1a) oder - wie in Figur 1 dargestellt - an der Wand, in welcher sich die erste Messöffnung 18a befindet, Infrarot-LEDs 30 angeordnet, welche für fotografische Aufnahmen dienen können. Sind, wie In Figur 1a dargestellt, die Infrarot-LEDs 30 hinter den Pflanzenbehältern angeordnet, so erfolgt ihre Stromversorgung vorzugsweise über Batterien/Akkumulatoren und ihre Ansteuerung erfolgt vorzugsweise drahtlos, beispielsweise über Funk. Die LEDs können auch unterhalb des Drehtellers angebracht sein, wobei in diesem Falle ein Schlitz unterhalb der Haltevorrichtungen das Licht nach oben durchlässt und ein Diffuser hinter den senkrecht stehenden Pflanzenbehältern Licht von hinten auf die Pflanzen wirft (nicht dargestellt).

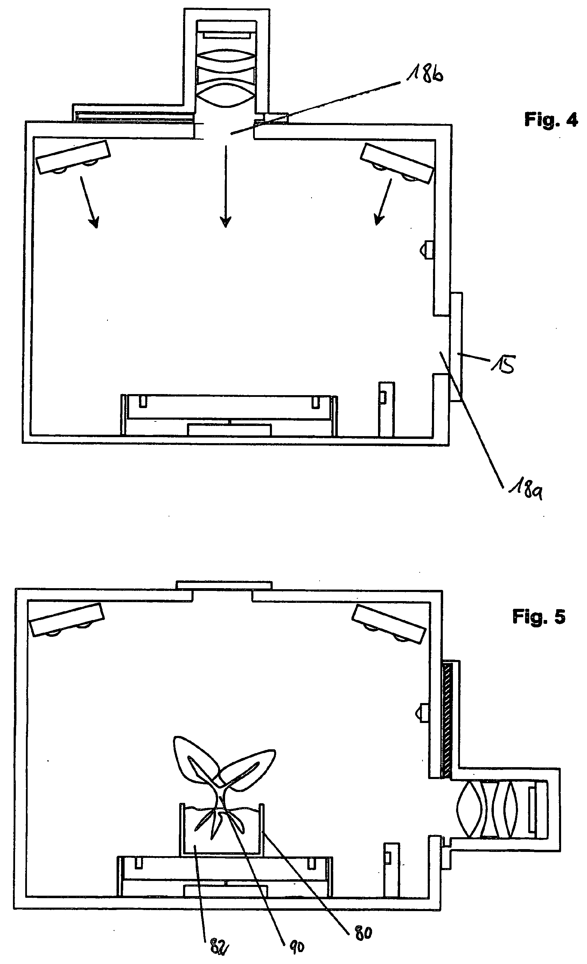

Durch das Vorhandensein von Haltevorrichtungen auf dem Drehteller können Pflanzen auf verschiedene Arten auf diesem Drehteller angeordnet werden. Zum einen ist es möglich, einen Topf, oder einen Becher 80, in welcher eine Pflanze 90 wächst, einfach zentral auf den Drehteller 20 zu stellen, wie dies in Figur 5 dargestellt ist. In vielen Fällen wird es hierbei zu bevorzugen sein, einen Topf oder einen Becher 80 aus einem durchsichtigen Material zu wählen, welcher mit einem durchsichtigen Gel 82 gefüllt ist, in welchem die Pflanze wächst.

In die Halteschlitze 26 können Halterungen 87 für Pflanzenkassetten 85 eingesteckt werden, die Haltebohrungen eignen sich insbesondere zur Aufnahme von sogenannten De-Wit-Pflanzenkammem. Die Figur 7 zeigt in einer Detaildarsteltung eine Pflanzen-Kassette 85, die mittels einer in einen Halteschlitz 26 eingesteckten Halterung 87 am Drehteller 20 gehalten ist. Die Pflanzenkammer besteht aus einem durchsichtigen Kunststoff.

Die Figur 3 zeigt schematisch eine Draufsicht auf ein Einzelelement 70 der Bestrahlungseinrichtung, wie es in der Messvorrichtung eingebaut ist. Dieses Einzelelement besteht aus einer ebenen Grundplatte 72 mit reflektierender Oberfläche und mehreren auf der Grundplatte angeordneten LEDs, im gezeigten Ausführungsbeispiel vier Stück 74a-74d. Drei der LEDs sind farbig und haben unterschiedliche Emissionsmaxima, welche vorzugsweise bei 450 nm , 660 nm und 730 nm liegen. Die vierte LED hat ein weißes Spektrum. Hierdurch kann das Spektrum des auf der Erdoberfläche ankommenden Sonnenlichtes, also des Tageslichtes, hinreichend genau nachgebildet werden. Um das Tageslicht sowohl zu unterschiedlichen Tageszeiten als auch an unterschiedlichen Breitengraden der Erde simulieren zu können, sind die LEDs über eine Steuereinheit einzeln ansteuerbar. Soll zum Beispiel das Sonnenlicht zur Mittagszeit oder in Äquatornähe nachgebildet werden, muss es einen erhöhten Blauanteil enthalten. Durch die einzelne Ansteuerbarkeit der LEDs ist es insbesondere auch möglich, das sich ändernde Sonnenlichtspektrum über den Tagesverlauf nachzubilden. Je nach Anwendungsfall können auch LEDs mit anderen Emissionsmaxima, beispielsweise um 500 nm (Grün) oder um 580 nm (Gelb) vorgesehen sein. Um eine ideale Bestrahlung zu erreichen, kann es sinnvoll sein, pro Haltevorrichtung für eine Pflanzen-Kassette ein Einzelelement vorzusehen. In manchen Anwendungen ist es auch möglich, ausschließlich LEDs einzusetzen, welche ein weißes Spektrum emittieren. Die eben beschriebenen Einzelelemente und die Art ihrer Ansteuerung können auch für andere Anwendungen, bei denen eine Tagslicht-Simulation benötigt wird, verwendet werden.

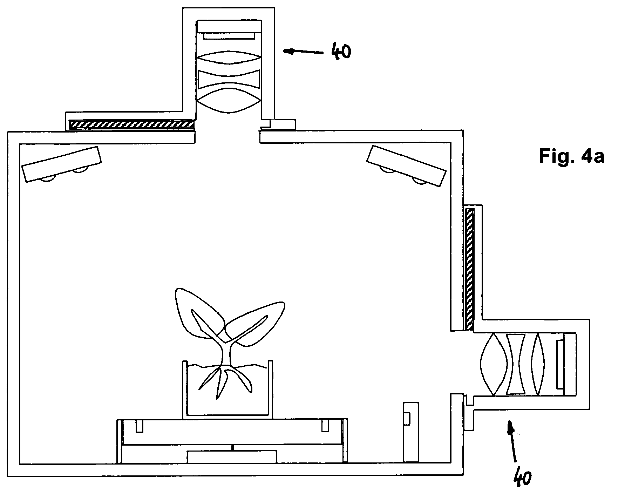

In Figur 4 ist ein zweiter Betriebszustand gezeigt. Hier ist die Kamera mittels geeigneter zweiter Befestigungseinrichtung an der zweiten Messöffnung 18b angeflanscht und blickt von oben in die Messkammer. Hierbei ist die erste Messöffnung 18a durch einen Blindflansch 15 lichtdicht verschlossen. Somit ist die Messvorrichtung auch für "traditionelle" Messgeometrien einsetzbar. Weiterhin ist es möglich, zwei Kameras an die Messkammer anzuflanschen, um so simultan oder quasi-simultan von zwei Blickrichtungen messen zu können (Figur 4a). Diese Kameras können vom gleichen Typ oder unterschiedlich ausgebildet sein.

Der "Stand-alone"-Betrieb der Messvorrichtung erfolgt wie nachstehend beschrieben:

### a) kombinierte Lumineszenz- und optische Messung

Auf die Drehachse 24 wird ein Drehteller 20 aufgesteckt. Auf diesem Drehteller 20 werden die zu beobachtende Pflanze, bzw. die zu beobachtenden Pflanzen angeordnet und die Tür geschlossen. Anschließend beginnt die Messung, welche sich in der Regel über mehrere Tage, das heißt über mehrere simulierte Tagphasen und Nachtphasen erstreckt. Alle oder ein Teil der Einzelelemente 70, 70' der Bestrahlungseinrichtung, werden für eine gewisse Zeitdauer angeschaltet, beispielsweise für 12 Stunden, um Tageslicht zu simulieren, wobei ein sich veränderndes Frequenzspektrum durchlaufen werden kann. Während der übrigen Stunden des Tages bleiben die Bestrahlungselemente 70, 70', ausgeschaltet. Die Bestrahlungselemente 70, 70' dienen auch als Beleuchtung zur Durchführung von photographischen Aufnahmen (sofern solche benötigt werden), wozu die Kamera 40 in einem ersten Arbeitszustand in gewissen Zeitintervallen optische Aufnahmen macht. Die Lumineszenzmessungen werden bei abgeschalteten Bestrahlungselementen 70, 70' durchgeführt. Hierbei befindet sich die Kamera in einen zweiten, hochempfindlichen Arbeitszustand. In der Regel ist es notwendig, dass die Bestrahlungselemente einige Minuten vor Durchführung der Lumineszenzmessungen abgeschaltet werden, bis ein Nachleuchten / eine Phosphoreszenz der Pflanzen, von Bestandteilen der Messvorrichtung und der verwendeten Pflanzengefäße abgeklungen ist. Die Bilder der photographischen Aufnahmen und der Lumineszenzmessungen können in einem späteren Datenverarbeitungsschritt überlagert werden. Zwischen einzelnen Aufnahmen beziehungsweise Lumineszenzmessungen kann der Drehteller 20 um einen vorbestimmten Betrag gedreht werden, so dass eine andere Ansicht derselben Pflanze oder eine andere Pflanzenkassette beziehungsweise De-Wit-Kammer vor der Kamera steht.

Sollen auch während der "Nachtphasen" photographische Messungen durchgeführt werden, so werden hierzu die Infrarot-LEDs 30 angeschaltet. Die Emissionswellenlänge beträgt hierbei vorzugsweise zwischen 900 und 950 nm. Pflanzen sind in diesem Bereich unempfindlich, so dass die "Nachtsimutation" nicht gestört wird. Es wird ein CCD-Sensor 46 in der Kamera 40 eingesetzt, welcher in diesem Wellenlängenbereich empfindlich ist, so dass mit der Kamera 40 auch in den Nachtphasen photographische Aufnahmen gemacht werden können. Alternativ ist es auch möglich, eine separate IR-Kamera einzusetzen. Die zu überlagernden Lumineszenz-Aufnahmen können selbstverständlich ebenfalls in den Nachtphasen durchgeführt werden, so dass entsprechend überlagerte Bilder über den gesamten 24-Stunden-Zyklus der Pflanzen erzeugt werden können.

### b) kombinierte Fluoreszenz- und optische Messung

Beim Fluoreszenzbetrieb wird das Emissionsfilter 50 vor die Eintrittslinse 42a gebracht Figur 6). Die Fluoreszenzmessung erfolgt ebenfalls bei ausgeschalteten Bestrahlungselementen 70, 70' jedoch bei angeschalteter Fluoreszenz-Anregungsquelle 60. Im Übrigen gilt das oben zur Lumineszenzmessung Gesagte.

Wie bereits oben erwähnt wurde, erstreckt sich ein Messzyklus an Pflanzen in der Regel über mehrere Tage. Die notwendige Netto-Messzeit zur Messung von Biolumineszenz, Chemolumineszenz oder Fluoreszenz beträgt in der Regel jedoch nur wenige Minuten am Tag. Den Rest der Zeit ist die Kamera "untätig". Da die hochempfindliche Kamera jedoch ein teures Bauteil ist, ist dies relativ unökonomisch. In der beschriebenen bevorzugten Ausführungsform ist der Drehteller deshalb nicht starr an der Drehachse angeordnet, sondern kann von dieser abgenommen werden. Somit kann ein Drehteller nur zum Messen in die Messkammer eingebracht werden, während er in der übrigen Zeit in einer Bestrahlungsvorrichtung angeordnet ist. Eine solche ist in einer schematischen Schnittdarstellung in Figur 8 dargestellt. Diese Bestrahlungseinrichtung verfügt vorzugsweise ebenfalls über ein lichtdichtes Gehäuse. In diesem lichtdichten Gehäuse ist eine Bestrahlungseinrichtung, wie sie oben beschrieben wurde, angeordnet. Um eine gleichmäßige Bestrahlung sicherzustellen, kann ebenfalls eine durch einen Motor antreibbare Drehachse vorgesehen sein, dies ist jedoch nicht zwingend erforderlich. Es kann auch eine statische Haltevorrichtung vorgesehen sein. Um eine ideale Bestrahlung zu erreichen, kann es auch hier sinnvoll sein, pro Haltevorrichtung für eine Pflanzen-Kassette ein Einzelelement vorzusehen.

In einem Messsystem können pro Messvorrichtung mehrere solche Bestrahlungsvorrichtungen und entsprechend mehrere Drehteller vorgesehen sein, was auch bevorzugt ist, wobei die Drehteller immer nur zu Messzwecken in die Messvorrichtung eingebracht werden und die übrige Zeit über in den Bestrahlungsvorrichtungen verbleiben. Somit kann die Zahl der Pflanzen, die mittels nur einer hochempfindlichen Kamera in einem Zeitintervall beobachtet werden können, stark erhöht werden. Um die einzelnen Messungen eindeutig zuordnen zu können, können die Drehteller oder die einzelnen Pflanzenkassetten / de-Witt-Kammern jeweils einen RFID-Chip tragen und in der Messkammer ist in diesem Fall ein RFID-Leser 95 angeordnet. Statt eines RFID-Systems können auch andere Identifizierungssysteme eingesetzt werden, beispielsweise solche, welche mit Barcodes arbeiten.

Die eben beschriebene Methode kann auch stark automatisiert werden, wobei die Zuführung der Drehteller 20 in die Messkammer K mittels eines mechanischen Zuführsystems erfolgt. Ein solches mechanisches Zuführsystem kann ein sogenannter Stacker oder ein Roboter sein. Um einen solchen Stacker oder Roboter nutzen zu können, wird anstelle der Tür eine lichtdichte Durchführung wie bei einem Platten-Luminometer angebracht. An diese lichtdichte Durchführung können mechanische Zuführsysteme jeglicher Art angeschlossen werden.

Weiterhin besteht die Möglichkeit, Messvorrichtung, Bestrahlungsvorrichtung und mechanisches Zuführsystem in eine Gesamtvorrichtung zu integrieren.

### Bezugszeichenliste

- 10: Gehäuse
- 12: Boden
- 12a: Öffnung im Boden
- 14: Dach
- 15: Blindflansch
- 16: Seitenwand
- 17: Tür
- 18a: erste Messöffnung
- 18b: zweite Messöffnung
- 20: Drehteller
- 21: Umrandung
- 22: Motor
- 24: Drehachse
- 26: Halteschlitze
- 28: Haltebohrungen
- 30: Infrarot-LED
- 40: Kamera
- 42: Optik
- 42a: Eintrittslinse
- 44: Gehäuse
- 46: CCD-Sensor
- 48: Kühler
- 50: Emissionsfilter
- 52: Shutter
- 60: Fluoreszenz-Anregungsquelle
- 62: LED
- 64: Anregungsfilter
- 70: Einzelelement
- 72: Grundplatte
- 74: LED
- 80: Becher
- 82: Gel
- 85: Pflanzen-Kassette
- 87: Halterung
- 90: Pflanze
- 95: RFID-Leser
- 110: Gehäuse der Bestrahlungsvorrichtung
- 122: Motor der Bestrahlungsvorrichtung
- 124: Drehachse der Bestrahlungsvorrichtung
- K: Messkammer
- B: Bestrahlungskammer

## Patentansprüche

1. Messvorrichtung zur Messung von Biolumineszenz, Chemolumineszenz oder Fluoreszenz von Pflanzen mit:
- einem eine Messkammer (K) umgebenden lichtdichten Gehäuse (10) und einer in die Messkammer blickenden hochempfindlichen Kamera (40), wobei in der Messkammer (K) eine sich vertikal erstreckende Drehachse (24) zur Anordnung eines Drehtellers (20) angeordnet ist,
- einem Drehteller (20), welcher auf der Drehachse (24) zumindest zum Messen angeordnet ist.
wobei in einem ersten Betriebszustand die Blickrichtung der Kamera (40) im Wesentlichen horizontal, das heißt senkrecht zur Drehachse (24), ist,
wobei der Drehteller (20) Haltevorrichtungen für mehrere senkrecht stehende Pflanzenkassetten (85) aufweist,
wobei eine Bestrahlungseinrichtung zur Strahlung simulierten Tageslichts von oben in Richtung des Drehtellers in seiner Messposition vorgesehen ist, wobei die Bestrahlungseinrichtung mehrere Einzelelemente (70, 70') aufweist, welche jeweils mindestens 3 LEDs (74) tragen, und
wobei eine von der Bestrahlungseinrichtung separate Fluoreszenz-Anregungsquelle (60) vorgesehen ist, welche in Richtung des Drehtellers in seiner Messposition zeigt.

2. Messvorrichtung nach Anspruch 1, wobei die LEDs (74) eines Einzelelements auf einer Platte (72) in einer Ebene angeordnet sind.

3. Messvorrichtung nach einem der Ansprüche 1 oder 2, wobei jedes Einzelelement (70, 70') genau einer Pflanzenkassette zugeordnet ist.

4. Messvorrichtung nach einem der vorangehenden Ansprüche, wobei in einem zweiten Betriebszustand die Blickrichtung der Kamera (40) im Wesentlichen senkrecht ist.

5. Messvorrichtung nach Anspruch 4, wobei das Gehäuse (10) zwei voneinander beabstandete Befestigungseinrichtungen für die Kamera (40) aufweist, wobei bei Befestigung der Kamera (40) an der ersten Befestigungseinrichtung der erste Betriebszustand vorliegt und bei Befestigung der Kamera (40) an der zweiten Befestigungseinrichtung der zweite Betriebszustand vorliegt.

6. Messsystem bestehend aus:
- wenigstens einem Drehteller (20), welcher Haltevorrichtungen für mehrere senkrecht stehende Pflanzenkassetten (85) aufweist,
- einer Messvorrichtung
mit einem eine Messkammer (K) umgebenden lichtdichten Gehäuse (10) und einer in die Messkammer blickenden hochempfindlichen Kamera (40),
wobei in der Messkammer (K) eine sich vertikal erstreckende Drehachse (24) zur Anordnung des Drehtellers (20) angeordnet ist, wobei in einem ersten Betriebszustand die Blickrichtung der Kamera (40) im Wesentlichen horizontal, das heißt senkrecht zur Drehachse (24) ist, und wobei eine Fluoreszenz-Anregungsquelle (60) vorgesehen ist,
- wenigstens einer von der Messvorrichtung separaten Bestrahlungsvorrichtung für auf dem Drehteller (20) angeordnete Pflanzenkassetten mit einem separaten lichtdichten Gehäuse (110), in welchem eine Haltevorrichtung für den Drehteller und eine Bestrahlungseinrichtung zur Strahlung simulierten Tageslichts von oben in Richtung des Drehtellers angeordnet sind,
wobei die Bestrahlungseinrichtung mehrere Einzelelemente (70, 70') aufweist, welche jeweils mindestens 3 LEDs (74) tragen.

7. Messystem nach Anspruch 6, wobei wenigstens zwei Bestrahlungsvorrichtungen und wenigstens zwei Drehteller (20) vorgesehen sind.

8. Verfahren zur Beobachtung von Pflanzen unter Verwendung eines Messsystems nach einem der Ansprüche 6 oder 7, wobei während eines Messzyklusses der wenigstens eine Drehteller mehrfach zwischen Bestrahlungsvorrichtung und Messvorrichtung transportiert wird.

## Claims

1. Measuring device for measuring bioluminescence, chemoluminescence, or fluorescence of plants, with:
- a lightproof housing (10) surrounding a measuring chamber (K), and a high-sensitivity camera (40) looking into the measuring chamber, wherein a vertically extending rotary axis (24) is arranged in the measuring chamber (K) for the arrangement of a rotary plate (20),
- a rotary plate (20), which is arranged on the rotary axis (24) at least for measuring,
wherein
in a first operational state, the viewing direction of the camera (40) is essentially horizontal, i.e. perpendicular to the rotary axis (24),
wherein
the rotary plate (20) comprises retaining devices for a plurality of vertically standing plant cassettes (85),
wherein
an irradiation device is provided for the radiating of simulated daylight from above into the direction of the rotary plate in its measuring position, wherein the irradiation device comprises a plurality of individual elements (70, 70'), which each carry at least 3 LED's (74), and
wherein
a fluorescence excitation source (60) separate from the irradiation device is provided, which points in the direction of the rotary plate in its measuring position.

2. Measuring device according to claim 1, wherein the LED's (74) of an individual element are arranged on a plate (72) in one plane.

3. Measuring device according to one of claims 1 or 2, wherein each individual element (70, 70') is allocated exactly to one plant cassette.

4. Measuring device according to one of the preceding claims, wherein, in a second operational state, the viewing direction of the camera (40) is essentially vertical.

5. Measuring device according to claim 4, wherein the housing (10) comprises two spaced apart securing devices for the camera (40), wherein, with the securing of the camera (40) at the first securing device, the first operating state pertains, and, with the securing of the camera (40) at the second securing device, the second operating state pertains.

6. Measuring system, consisting of:
- at least one rotary plate (20), which comprises holding devices for a - plurality of vertically standing plant cassettes (85),
- a measuring device
with a lightproof housing (10) surrounding a measuring chamber (K), and a high-sensitivity camera (40) looking into the measuring chamber,
wherein a vertically extending rotary axis (24) is arranged in the measuring chamber (K) for the arrangement of a rotary plate (20), wherein in a first operating state the viewing direction of the camera (40) is essentially horizontal, i.e. perpendicular to the rotary axis (24), and wherein a fluorescence excitation source (60) is provided,
- at least one irradiation device separate from the measuring device for plant cassettes arranged on the rotary plate (20) with a separate lightproof housing (110), in which a retaining device for the rotary plate, and an irradiation device for the radiation of simulated daylight from above in the direction of the rotary plate are arranged,
wherein the irradiation device comprises a plurality of individual elements (70, 70'), which each carry at least 3 LED's (74).

7. Measuring system according to claim 6, wherein at least two irradiation devices and at least two rotary plates (20) are provided.

8. Method for observing plants, making use of a measuring system according to one of claims 6 or 7, wherein, during a measuring cycle, the at least one rotary plate is transported several times between the irradiating device and the measuring device.

## Revendications

1. Dispositif de mesure pour mesurer la bioluminescence, la chimioluminescence ou la fluorescence de plantes comprenant:
- un boîtier (10) étanche à la lumière entourant une chambre de mesure (K) et une caméra haute sensibilité (40) visant dans la chambre de mesure, dispositif dans lequel un axe de rotation (24) s'étendant verticalement est agencé dans la chambre de mesure (K) pour l'agencement d'un plateau tournant (20),
- un plateau tournant (20), lequel est agencé sur l'axe de rotation (24) au moins pour la mesure,
dispositif dans lequel,
dans un premier état de fonctionnement, la direction de visée de la caméra (40) est sensiblement horizontale, à savoir perpendiculaire à l'axe de rotation (24),
le plateau tournant (20) comporte des dispositifs de maintien pour plusieurs cassettes de plantes (85) se tenant verticalement,
un équipement d'irradiation est prévu pour rayonner de la lumière simulant la lumière du jour, d'en haut en direction du plateau tournant dans sa position de mesure, l'équipement d'irradiation comportant plusieurs éléments individuels (70, 70') portant chacun au moins trois LEDs (74), et
il est prévu une source d'excitation de fluorescence (60) séparée de l'équipement d'irradiation et pointant en direction du plateau tournant dans sa position de mesure.

2. Dispositif de mesure selon la revendication 1, dans lequel les LEDs (74) d'un élément individuel sont agencées dans un plan sur une plaque (72).

3. Dispositif de mesure selon la revendication 1 ou 2, dans lequel chaque élément individuel (70, 70') est affecté exactement à une cassette de plantes.

4. Dispositif de mesure selon l'une quelconque des revendications précédentes, dans lequel, dans un deuxième état de fonctionnement, la direction de visée de la caméra (40) est sensiblement verticale.

5. Dispositif de mesure selon la revendication 4, dans lequel le boîtier (10) présente deux équipements de fixation espacés l'un de l'autre pour la caméra (40), boîtier dans lequel lors de la fixation de la caméra (40) sur le premier équipement de fixation le premier état de fonctionnement est réalisé et lors de la fixation de la caméra (40) sur le deuxième moyen de fixation le deuxième état de fonctionnement est réalisé.

6. Système de mesure comprenant :
- au moins un plateau tournant (20) présentant des dispositifs de maintien pour plusieurs cassettes de plantes se tenant verticalement,
- un dispositif de mesure
comprenant un boîtier (10) étanche à la lumière entourant une chambre de mesure (K) et une caméra haute sensibilité (40) visant dans la chambre de mesure,
dispositif dans lequel
un axe de rotation (24) s'étendant verticalement est agencé dans la chambre de mesure (K) pour l'agencement d'un plateau tournant (20),
dans un premier état de fonctionnement, la direction de visée de la caméra (40) est sensiblement horizontale, à savoir perpendiculaire à l'axe de rotation (24), et
il est prévu une source d'excitation de fluorescence (60),
- au moins un dispositif d'irradiation, séparé du dispositif de mesure, pour des cassettes de plantes agencées sur le plateau tournant (20) comprenant un boîtier (110) séparé étanche à la lumière, dans lequel sont agencés un dispositif de maintien pour le plateau tournant et un équipement d'irradiation pour rayonner de la lumière simulant la lumière du jour, d'en haut en direction du plateau tournant, l'équipement d'irradiation comportant plusieurs éléments individuels (70, 70') portant chacun au moins trois LEDs (74).

7. Système de mesure selon la revendication 6, dans lequel au moins deux dispositifs d'irradiation et au moins deux plateaux tournants (20) sont prévus.

8. Procédé pour l'observation des plantes par l'utilisation d'un système de mesure selon l'une des revendications 6 ou 7, dans lequel pendant un cycle de mesure, l'au moins un plateau tournant est transporté plusieurs fois entre dispositif d'irradiation et dispositif de mesure.
